# EUROPÄISCHE PATENTSCHRIFT

(11) **EP 0 950 495 B1**
(45) Veröffentlichungstag und Bekanntmachung des Hinweises auf die Patenterteilung: **13.06.2001**
(21) Anmeldenummer: 97116065.0
(22) Anmeldetag: 16.09.1997
(51) Int. Cl.: B29C 45/26, B29C 33/48

(54) **Form für Rohrkrümmer**
Mould for bent pipes
Moule pour tuyauteries coudées

(43) Veröffentlichungstag der Anmeldung: 20.10.1999
(73) Patentinhaber: IFW MANFRED OTTE GESELLSCHAFT m.b.H. & Co. KG, 4563 Micheldorf (AT)
(72) Erfinder: Mitteregger, Erich, 4563 Micheldorf (AT); Schwaiger, Ernst, 4563 Micheldorf (AT)
(74) Vertreter: Hofinger, Engelbert, Dr.Dr.

(56) Entgegenhaltungen:
- WO-A-85/04604
- US-A- 3 095 613
- US-A- 3 152 365

## Beschreibung

Die Erfindung betrifft eine Vorrichtung zum Spritzgießen von Rohrkrümmern aus Kunststoff, die einen Krümmerabschnitt mit einer kreisbogenförmigen Mittellinie und gleichbleibendem Innenquerschnitt und ein- oder beidseitig daran anschließenden zylindrischen Anschlußstutzen mit größerem Innenquerschnitt aufweisen, mit einer Spritzgießform, die in der Ebene der kreisbogenförmigen Mittellinie des Krümmerabschnitts in zumindest zwei Außenformteile teilbar ist, die einen Formhohlraum bilden, und die einen Krümmerkem mit einem längs der kreisbogenförmigen Mittellinie des Krümmerbereiches verschwenkbaren Schwenkteil und einen axial entlang seiner Mittelachse verschieblichen Zylinderkem für jeden Anschlußstutzen umfaßt, wobei zur Bewegung des Schwenkteils eine Verschiebeeinrichtung dient, welche eine am Schwenkteil angelenkte, in einem Anschlußstutzen längsverschiebbare Stange umfaßt.

Bei der Einrichtung nach WO85/04604 wird der Krümmerabschnitt nicht mittels einer Stange, sondern durch Zugelemente, vorzugsweise durch Drahtseile, bewegt, welche den in Scheiben unterteilten Krümmerkern durchsetzen. Da diese Scheiben gegenseitig gegen Verschieben und Verdrehen gesichert sein müssen, ergibt sich insgesamt ein sehr aufwendiger Aufbau.

Die Einrichtung nach US-A 3,095,613 kann auf einen eigentlichen Krümmerkern überhaupt verzichten, und zwar dadurch, daß der Krümmungsradius des Rohres im Vergleich zum Rohrdurchmesser extrem klein gewählt wird. Zusätzlich zu den Zylinderkemen sind hier lediglich im Bereich der Rohrbeuge kleine Kemsegmente einfach angelenkt.

US-A 3,152,365 betrifft die Herstellung eines Telefonhörers, wobei es die relativ großen endseitigen Öffnungen relativ leicht machen, den Formkern mittels einer einfach angelenkten Stange zu ziehen.

Aus der US 4,184,834 ist eine Vorrichtung der eingangs definierten Art zum Herstellen von Rohrkrümmern, die einen Krümmerabschnitt mit kreisbogenförmiger Mittellinie und gleichbleibendem Innenquerschnitt und zwei daran anschließende erweiterte Anschlußstutzen umfassen, bekannt. Der Krümmerkernteil ist gelenkig an einem der Stutzenkemteile angehängt und muß sich beim Einführen in die Form und beim Entformen des Rohrkrümmers seinen Weg entlang des Formhohlraums bzw. entlang der Innenwandung des Rohrkrümmers selbst suchen. Erst beim endgültigen Zusammenfügen aller Kernteile erfolgt eine Zentrierung des Krümmerkernteils in der Form. Die Schnittebene zwischen dem führenden zylindrischen Kernteil und dem angehängten Krümmerkernteil reicht in den Krümmerabschnitt hinein.

Bei der bekannten Einrichtung sind die Anschlußstutzen so kurz und so weit, daß die Entfernung des Krümmerkemteiles aus dem fertiggestellten Rohr lediglich durch Verschwenken des gebogenen Krümmerabschnittes um dessen Krümmungsmittelpunkt erfolgt.

Aufgabe der Erfindung ist es demgegenüber, die Herstellung von Rohrkrümmern möglich zu machen, bei denen an den gekrümmten Abschnitt ein beliebig langer Zylinderstutzen anschließt.

Dies wird erfindungsgemäß dadurch erreicht, daß die Verschiebeeinrichtung zwei in der Krümmerebene voneinander distanzierte Stangen umfaßt, sowie eine Zwangsführung, welche die an den Schwenkteil angelenkten Enden der Stangen im Krümmerabschnitt auf Kreisbahnen um die Krümmungs-achse und im daran anschließenden Anschlußstutzenparallel zu diesem führt.

Zweckmäßige Weiterbildungen der Erfindung sind Gegenstand der abhängigen Ansprüche.

Einzelheiten einer möglichen konstruktiven Durchführung dieses Gedankens werden anhand des Ausführungsbeispieles diskutiert.

Die Erfindung setzt voraus, daß die Zylinderanschlußstutzen einen größeren Durchmesser aufweisen als der gekrümmte Rohrteil. Dieser Unterschied soll jedoch aus strömungstechnischen Gründen so klein wie nur möglich sein. Dies wird primär dadurch erreicht, daß der Schwenkteil im eingeschobenen Zustand nur bis zur Mitte des Rohrkrümmers reicht. Falls auch an die zweite Seite des Krümmerabschnittes ein langer Anschlußstutzen anschließen soll, wird die erfindungsgemäße Einrichtung symmetrisch zweimal angeordnet. Eine weitere Angleichung der Querschnitte von Anschlußstutzen und Krümmer erreicht man dadurch, daß der Krümmerkem zusätzlich zum Schwenkteil einen an der Innenseite des Krümmerabschnitts liegenden Schieber umfaßt, welcher bei herausgezogenem Zylinderkern entlang des Zylinderkems und des Schwenkteiles in Richtung auf die Achse des Anschlußstutzens verschiebbar ist. Im gleichen Sinne wirkt die bereits aus US-PS 4,184,834 bekannte Maßnahme, den Zylinderkern in die Außenseite des gekrümmten Rohrabschnittes hineinragen zu lassen.

In der Zeichnung wird ein Ausführungsbeispiel der Erfindung in drei Bewegungsstadien des Formkerns im Schnitt entlang der Mittelebene eines Rohrkrümmers dargestellt.

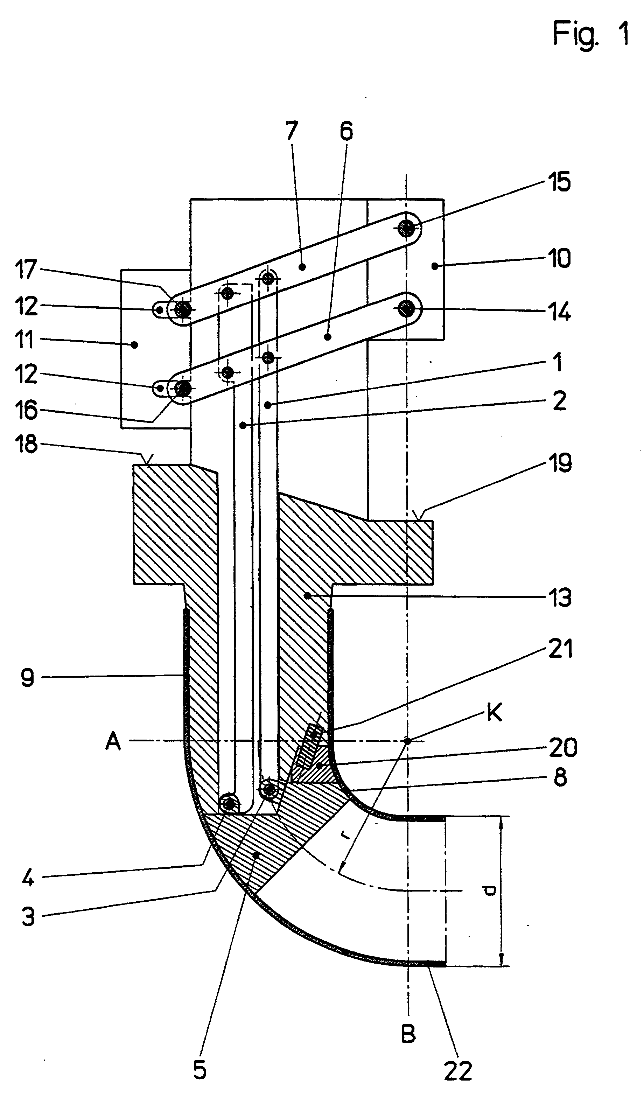

Fig. 1 stellt den erfindungsgemäßen Formkern während der Herstellung des Spritzteiles dar, welcher aus einem Krümmerabschnitt 8 in Form eines Rohrsegmentes und aus daran anschließenden langen bzw. kurzen Anschlußstutzen 9, 22 besteht. Der Formkern besteht aus drei Teilen, nämlich einem Zylinderkem 13, einem Schwenkteil 5 und einem Schieber 20. Zwischen dem Zylinderkern 13 und dem Schieber 20 befindet sich eine Feder 21, welche den Schieber 20 in Richtung auf die Achse des Anschlußstutzens 9 beaufschlagt.

Der Krümmerabschnitt 8 ist mit einem Radius r um eine Krümmungsachse gebogen, welche die Zeichenebene in Punkt K durchstößt. Der Durchmesser d des Spritzteiles entspricht dem Krümmungsradius r, was jedoch keine Voraussetzung für das Funktionieren der Erfindung ist. Vielmehr ist es als ein besonderer Vorteil der Erfindung anzusehen, daß mit relativ großem Krümmungsradius r gearbeitet werden kann.

Stangen 1 und 2 sind über Gelenke mit dem Schwenkteil 5 verbunden, wobei die Schwenkachsen in einer Radialebene durch die Krümmungsachse K liegen.

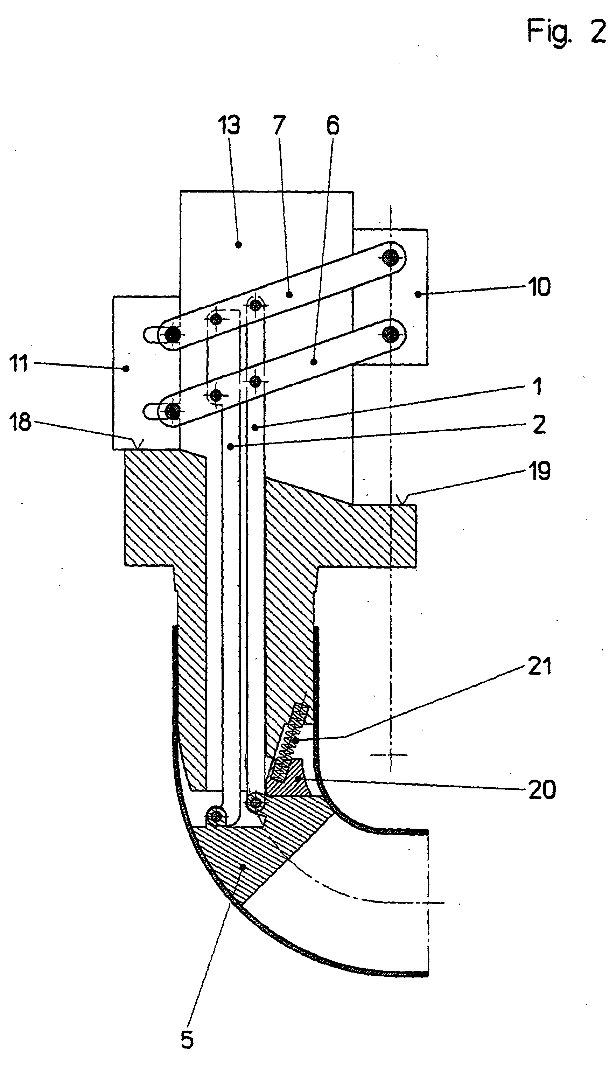

Die Entformung erfolgt nach Öffnung der Außenform in drei getrennten Phasen, deren erste aus Fig. 2 ersichtlich ist. Der Zylinderkern 13 wird dabei in Achsrichtung herausgezogen, bis er am Führungsblock 11 mit seinem Anschlag 18 zur Anlage kommt. Der Schwenkteil 5 bleibt dabei in seiner ursprünglichen Stellung, wogegen der Schieber 20 unter dem Einfluß der sich ausdehnenden Feder 21 auf dem Schwenkteil 5 in Achsrichtung gleitet und damit zur Gänze in den Zylinderquerschnitt gelangt

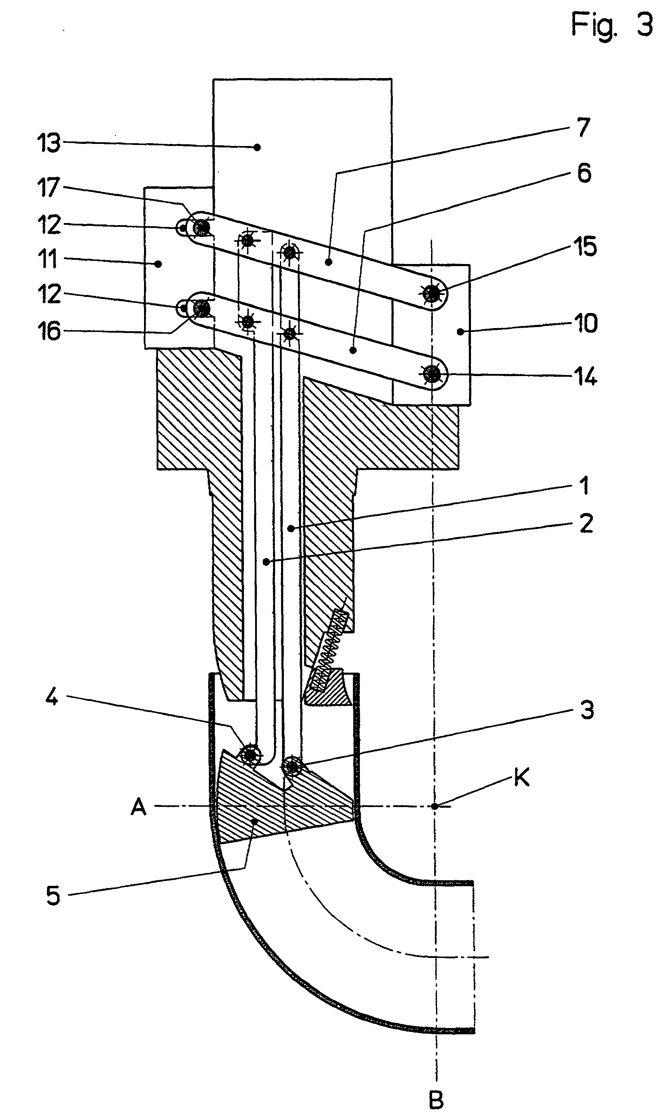

Beim Übergang von der Position gemäß Fig. 2 in jene nach Fig. 3 wird der Zylinderkem 13 weiter herausgezogen und nimmt dabei den Führungsblock 11 mit. Da der Führungsblock 10 stehenbleibt, erfolgt hiedurch eine Verschwenkung der Leisten 6 und 7, welche die Stangen 1 und 2 herausziehen und dabei den Schwenkteil 5 aus dem Krümmerabschnitt 8 in den Anschlußstutzen 9 bewegen. Damit dies möglich ist, muß der Anschlußstutzen 9 einen geringfügig größeren Querschnitt aufweisen als der Krümmerabschnitt 8.

Beim Übergang von Fig. 2 auf Fig. 3 bewegen sich die Achsen 3 und 4 des Schwenkteiles 5 in Kreisbögen um die durch K gehende Krümmungsachse. In gleichem Ausmaß werden die Leisten 6 und 7 um die Achsen 14 und 15 verschwenkt, wobei das Ausmaß der Schwenkung durch die Verschiebung des Führungsblockes 11 bestimmt ist, in welchem die freien Enden 16 und 17 der Leisten 6 und 7 in Langlöchern 12 gelagert sind.

Bei weiterer Bewegung des in Fig. 3 dargestellten Kern-Ensembles in Achsrichtung kommt der gesamte Kern endgültig vom Anschlußstutzen 9 frei.

Die Steuerung der Bewegung der einzelnen Kemteile kann rein mechanisch durch einen Schieber erfolgen, welcher Führungsschlitze aufweist, mit denen die zu verschiebenden Teile 10 und 11 über seitliche Vorsprünge in Eingriff stehen, wie dies etwa in der DE-U 94 14 523 dargestellt ist. Genauso gut können elektrische oder hydraulische Antriebe Verwendung finden, um die Stangen 1, 2 durch die beschriebene Bewegungsfolge und wieder zurückzuführen.

Beim dargestellten Ausführungsbeispiel wird ein ganz geringer Unterschied (etwa 5 %) zwischen den Durchmessern des Anschlußstutzens 9 und des Krümmerabschnittes 8 erzielt. Dies ist zunächst darauf zurückzuführen, daß der Schwenkteil 5 nur in jene Hälfte des Krümmerabschnittes 8 ragt, welche dem langen Anschlußstutzen 9 benachbart ist. Eine weitere Verbesserung ergibt sich durch die etwa kreissektorförmige Querschnittsform des Schwenkteiles 5. Ermöglicht wird dies durch die beschriebene Anordnung eines Schiebers 20. Eine Verringerung des Winkels, um den der Schwenkteil 5 geschwenkt werden muß, ergibt sich auch durch das teilweise Hineinragen des Zylinderkerns 13 in den durch die Linie A-K-B definierten Krümmerabschnitt 8.

## Patentansprüche

1. Vorrichtung zum Spritzgießen von Rohrkrümmern aus Kunststoff, die einen Krümmerabschnitt (8) mit einer kreisbogenförmigen Mittellinie und gleichbleibendem Innenquerschnitt und ein- oder beidseitig daran anschließenden zylindrischen Anschlußstutzen (9,22) mit größerem Innenquerschnitt aufweisen, mit einer Spritzgießform, die in der Ebene der kreisbogenförmigen Mittellinie des Krümmerabschnitts (8) in zumindest zwei Außenformteile teilbar ist, die einen Formhohlraum bilden, und die einen Krümmerkem mit einem längs der kreisbogenförmigen Mittellinie des Krümmerbereiches verschwenkbaren Schwenkteil (5) und einen axial entlang seiner Mittelachse verschieblichen Zylinderkern (13) für jeden Anschlußstutzen (9,22) umfaßt, wobei zur Bewegung des Schwenkteils (5) eine Verschiebeeinrichtung dient, welche eine am Schwenkteil (5) angelenkte, in einem Anschlußstutzen (9;22) längsverschiebbare Stange umfaßt, dadurch gekennzeichnet, daß die Verschiebeeinrichtung zwei in der Krümmerebene voneinander distanzierte Stangen (1,2) umfaßt, sowie eine Zwangsführung, welche die an den Schwenkteil (5) angelenkten Enden (3,4) der Stangen (1,2) im Krümmerabschnitt (8) auf Kreisbahnen um die Krümmungs-achse (K) und im daran anschließenden Anschlußstutzen (9) parallel zu diesem führt.

2. Vorrichtung nach Anspruch 1, dadurch gekennzeichnet, daß zur Führung der Stangen (1,2) zwei schwenkbare Leisten (6,7) dienen, deren Schwenkachsen (14,15) in einer die Krümmungsachse (K) enthaltenden Ebene liegen, und welche alternativ zur Verschwenkung gemeinsam in Richtung des Anschlußstutzens (9) verschiebbar sind.

3. Vorrichtung nach Anspruch 2, dadurch gekennzeichnet, daß die Schwenkachsen (14,15) und die freien Enden (16,17) der Leisten (6,7) in je einem parallel zum Anschlußstutzen (9) verschiebbaren Führungsblock (10,11) gelagert sind, wobei die Lagerung der freien Enden (16,17) in Langlöchern (12) erfolgt.

4. Vorrichtung nach Anspruch 3, dadurch gekennzeichnet, daß die Führungsblöcke (10,11) durch in axialer Richtung des Anschlußstutzens (9) versetzte Anschläge (18,19) des Zylinderkerns (13) beim Ausfahren des Zylinderkerns (13) mitgenommen werden.

5. Vorrichtung nach einem der Ansprüche 1 - 4, dadurch gekennzeichnet, daß der Schwenkteil (5) im eingeschobenen Zustand nur bis zur Mitte des Rohrkrümmers reicht.

6. Vorrichtung nach einem der Ansprüche 1 bis 5, dadurch gekennzeichnet, daß der Krümmerkem zusätzlich zum Schwenkteil (5) einen an der Innenseite des Krümmerabschnitts (8) liegenden Schieber (20) umfaßt, welcher bei herausgezogenem Zylinderkern (13) entlang des Zylinderkerns (13) und des Schwenkteiles (5) in Richtung auf die Achse des Anschlußstutzens (9) verschiebbar ist.

7. Vorrichtung nach einem der vorhergehenden Ansprüche, dadurch gekennzeichnet, daß der Zylinderkem (13) an der Krümmungsaußenseite des Krümmers in den Krümmerabschnitt (8) ragt.

## Claims

1. Apparatus for injection molding pipe bends of plastic material, which have a bend part (8) with an arcuate center line and of uniform internal cross-section and cylindrical connecting parts (9, 22) which are connected to the bend part at one or both sides, being of larger internal cross-section, comprising an injection molding mold which can be divided in the plane of the arcuate center line of the bend part (8) into at least two outer mold portions forming a mold cavity, and which includes a bend core with a pivotal member (5) pivotable along the arcuate center line of the bend region and a cylindrical core (13) displaceable axially along its center line, for each connecting part (9, 22), wherein a displacement device serves for movement of the pivotal member (5), the displacement device including a bar pivoted to the pivotal member (5) and longitudinally displaceable in a connecting part (9, 22), characterised in that the displacement device includes two bars (1, 2) which are spaced from each other in the plane of the bend, as well as a forced guide which guides the ends (3, 4) of the bars (1, 2) pivoted to the pivotal member (5) in the bend part (8) on circular paths about the axis of curvature (K) and in the connecting part (9) adjoining same parallel thereto.

2. Apparatus as set forth in claim 1 characterised in that two pivotable bar members (6. 7) serve to guide the bars (1. 2). the pivot axes (14, 15) of which bar members (6, 7) are disposed in a plane containing the axis of curvature (K). which bar members are displaceable alternatively for the pivotal movement jointly in the direction of the connecting part (9).

3. Apparatus as set forth in claim 2 characterised in that the pivot axes (14, 15) and the free ends (16, 17) of the bar members (6. 7) are mounted in a respective guide block (10. 11) displaceable in parallel relationship to the connecting part (9), the free ends (16. 17) being mounted in slots (12).

4. Apparatus as set forth in claim 3 characterised in that the guide blocks (10, 11) are entrained upon outward movement of the cylindrical core (13) by abutments (18, 19) on the cylindrical core (13). the abutments being displaced in the axial direction of the connecting part (9).

5. Apparatus as set forth in one of claims 1 through 4 characterised in that in the inserted condition the pivotal member (5) reaches only to the center of the pipe bend.

6. Apparatus as set forth in one of claims 1 through 5 characterised in that in addition to the pivotal member (5) the bend core includes a slider (20) which is disposed at the inward side of the bend part (8) and which when the cylinder core (13) is pulled out is displaceable along the cylinder core (13) and the pivotal member (5) in a direction towards the axis of the connecting part (9).

7. Apparatus as set forth in one of the preceding claims characterised in that the cylindrical core (13) projects into the bend part (8) at the outside of the bend.

## Revendications

1. Dispositif pour le moulage par injection de tuyauteries coudées en matière plastique qui présentent une partie coudée (8) avec une ligne médiane en forme d'arc de cercle et une section transversale intérieure constante, et des tubulures de raccordement (9, 22) cylindriques de section transversale intérieure plus grande se raccordant à ladite partie coudée d'un côté ou des deux côtés, comportant un moule d'injection qui, dans le plan de la ligne médiane en forme d'arc de cercle de la partie coudée (8), peut être divisé en au moins deux parties extérieures de moule qui forment une cavité de moule, et qui comprend un noyau de coude avec une partie pivotante (5) pouvant pivoter le long de la ligne médiane en forme d'arc de cercle de la partie coudée et un noyau cylindrique (13) pouvant se déplacer dans la direction axiale le long de son axe médian pour chaque tubulure de raccordement (9, 22), le déplacement de la partie pivotante (5) s'effectuant au moyen d'un dispositif de déplacement qui comprend une tige articulée sur la partie pivotante (5) et pouvant se déplacer longitudinalement dans une tubulure de raccordement (9, 22), caractérisé en ce que le dispositif de déplacement comprend deux tiges (1, 2) disposées à distance l'une de l'autre dans le plan du coude ainsi qu'un guidage forcé qui guide les extrémités (3, 4) des tiges (1, 2) articulées sur la partie pivotante (5) dans la partie coudée (8) sur des trajectoires circulaires autour de l'axe de courbure (K) du coude et dans la tubulure de raccordement (9) qui s'y raccorde, parallèlement à celle-ci.

2. Dispositif selon la revendication 1, caractérisé en ce que pour guider les tiges (1, 2) on utilise deux barres (6, 7) pivotantes dont les axes de pivotement (14, 15) se situent dans un plan contenant l'axe de courbure (K) du coude et qui, dans une alternative au pivotement, peuvent se déplacer conjointement en direction de la tubulure de raccordement (9).

3. Dispositif selon la revendication 2, caractérisé en ce que les axes de pivotement (14, 15) et les extrémités libres (16, 17) des barres (6, 7) sont montés respectivement dans un bloc de guidage (10, 11) pouvant se déplacer parallèlement à la tubulure de raccordement (9), le montage des extrémités libres (16, 17) s'effectuant dans des trous oblongs (12).

4. Dispositif selon la revendication 3, caractérisé en ce que les blocs de guidage (10, 11) sont entraînés lors de la sortie du noyau cylindrique (13), par des butées (18, 19) du noyau cylindrique (13) décalées dans la direction axiale de la tubulure de raccordement (9).

5. Dispositif selon une des revendications 1 à 4, caractérisé en ce que la partie pivotante (5), à l'état rentré, ne va que jusqu'au milieu de la tuyauterie coudée.

6. Dispositif selon une des revendications 1 à 5, caractérisé en ce que le noyau de coude comprend, en plus de la partie pivotante (5), une coulisse (20) appliquée contre la face intérieure de la partie coudée (8), laquelle coulisse, lorsque le noyau cylindrique (13) est extrait, peut se déplacer le long du noyau cylindrique (13) et de la partie pivotante (5) en direction de l'axe de la tubulure de raccordement (9).

7. Dispositif selon une des revendications précédentes, caractérisé en ce que le noyau cylindrique (13), au niveau de la face extérieure du coude, fait saillie dans la partie coudée (8).
